# FASCICULE DE BREVET EUROPEEN

(11) **EP 0 870 204 B1**
(45) Date de publication et mention de la délivrance du brevet: **18.12.2002**
(21) Numéro de dépôt: 97944929.5
(22) Date de dépôt: 06.10.1997
(51) Int. Cl.: G01S 7/02

(54) **DETECTEURS D'EMISSIONS ELECTROMAGNETIQUES NOTAMMENT DE RADARS, A DEBIT AMONT REDUIT**
VORAB DATENREDUZIERTE DETEKTOREN FÜR ELEKTROMAGNETISCHE WELLEN, INSBESONDERE RADAREMPFÄNGER
ELECTROMAGNETIC IN PARTICULAR RADAR EMISSION SENSORS, WITH REDUCED DOWNSTREAM FLOW RATE

(30) Priorité: 11.10.1996 FR 9612427
(43) Date de publication de la demande: 14.10.1998
(73) Titulaire: Thales, 75008 Paris (FR)
(72) Inventeur: CELTON, René, Thomson-CSF S.C.P.I., F-94117 Arcueil Cedex (FR); FLORIN, Franck, Thomson-CSF S.C.P.I., F-94117 Arcueil Cedex (FR); KUBIAK, Jean-Luc, Thomson-CSF S.C.P.I., F-94117 Arcueil Cedex (FR); LANCON, Fabienne, Thomson-CSF S.C.P.I., F-94117 Arcueil Cedex (FR)
(74) Mandataire: Benoit, Monique
(86) Numéro de dépôt international: FR9701780
(87) Numéro de publication internationale: WO98016843

(56) Documents cités:
- EP-A- 0 315 529
- EP-A- 0 452 023
- US-A- 4 879 561
- US-A- 4 996 647
- US-A- 5 166 692
- US-A- 5 563 806

## Description

La présente invention concerne un détecteur d'émissions électromagnétiques. Elle s'applique notamment aux détecteurs de radars qui ont pour objectif de détecter, de localiser et d'identifier les émissions électromagnétiques radar environnantes.

Par opposition aux signaux de télécommunications, les émissions radar interceptées sont essentiellement constituées de trains d'impulsions caractéristiques du radar émetteur et de son mode de fonctionnement. Dans ce cadre, les détecteurs de radar comportent généralement au moins trois parties réalisant séquentiellement leurs traitements.

Une première partie réalise l'acquisition à partir de mesures électromagnétiques instantanées. Cette acquisition caractérise les impulsions reçues en fournissant une estimation de leurs paramètres caractéristiques, par exemple la fréquence moyenne, la longueur d'impulsion, l'azimut, le niveau de puissance ou encore des modulations éventuelles.

Une deuxième partie réalise l'extraction qui regroupe les impulsions relatives à chaque émission radar, sépare les différentes émissions reçues et caractérise les pistes ainsi formées, par exemple par la période de répétition et le type de mode d'émission.

Une troisième partie réalise l'identification qui détermine les caractéristiques des radars interceptés et de leurs modes de fonctionnement.

Le document US-A-5 563 806 divulgue un détecteur d'émissions radar comportant des moyens d'acquisition et des moyens d'extraction pour séparer les impulsions relatives à chaque émission radar.

Les moyens d'extraction connus mettent généralement en oeuvre deux sous-fonctions essentielles :
- une première sous-fonction effectue un tri ou pré-traitement qui regroupe les impulsions par blocs ou classes censés contenir chacun les impulsions relatives à une même émission,
- une deuxième sous-fonction effectue une analyse qui précise les caractéristiques des émissions ainsi extraites.

Le tri est établi à partir d'un traitement rapide réalisé par exemple en logique câblée microprogrammée. Il porte sur les paramètres de chaque impulsion issue de l'acquisition. Ces paramètres sont par exemple appelés les paramètres primaires. Les moyens de tri comportent par exemple une batterie de filtres numériques qui reçoivent chacun la totalité des impulsions issues de l'acquisition et comparent les paramètres primaires de chaque impulsion à des fourchettes caractéristiques du filtre. A chaque filtre est par exemple associé un radar déterminé, défini par un ensemble de fourchettes portant sur les paramètres primaires. Lorsqu'une impulsion est reconnue par un filtre, elle est par exemple rangée dans un bloc mémoire spécifique associé à ce filtre.

Le nombre d'opérations élémentaires nécessaires par seconde pour réaliser ces opérations de tri dépend notamment de la densité d'impulsions en entrée et du nombre de filtres, donc du nombre de radars gérés. La puissance de calcul nécessaire peut notamment atteindre mille milliards d'opérations élémentaires par seconde, nécessitant par. ailleurs le développement de composants spécifiques. Ces contraintes s'avèrent fort coûteuses et difficilement compatibles des réductions de coûts de plus en plus imposées par le marché.

Le but de l'invention est notamment de permettre la réalisation de tri par les moyens d'extraction en limitant le nombre d'opérations élémentaires tout en respectant les contraintes de spécifications portant sur la densité d'impulsions en entrée qui peut atteindre par exemple le milliard d'impulsions par seconde.

A cet effet, l'invention insère entre les moyens d'acquisition et les moyens d'extraction, des moyens de réduction de débit qui éliminent une partie des informations redondantes contenues dans les suites d'impulsions reçues.

Plus précisément, l'invention a pour objet un détecteur d'émissions électromagnétiques, caractérisé en ce qu'il comporte entre des moyens d'acquisition des impulsions électromagnétiques reçues et des moyens d'extraction regroupant les impulsions relatives à chaque émission, des moyens de réduction de débit comportant des moyens de caractérisation des suites d'impulsions à haute fréquence de récurrence et de compression des données correspondantes.

L'invention a pour principaux avantages qu'elle réduit fortement le débit d'informations en entrée des moyens d'extraction, qu'elle est simple à mettre en oeuvre et qu'elle est économique.

D'autres caractéristiques et avantages de l'invention apparaîtront à l'aide de la description qui suit, faite en regard des dessins annexés qui représentent :
- la figure 1, un exemple de détecteur de radars selon l'art antérieur ;
- la figure 2, un exemple de détecteur de radars selon l'invention.

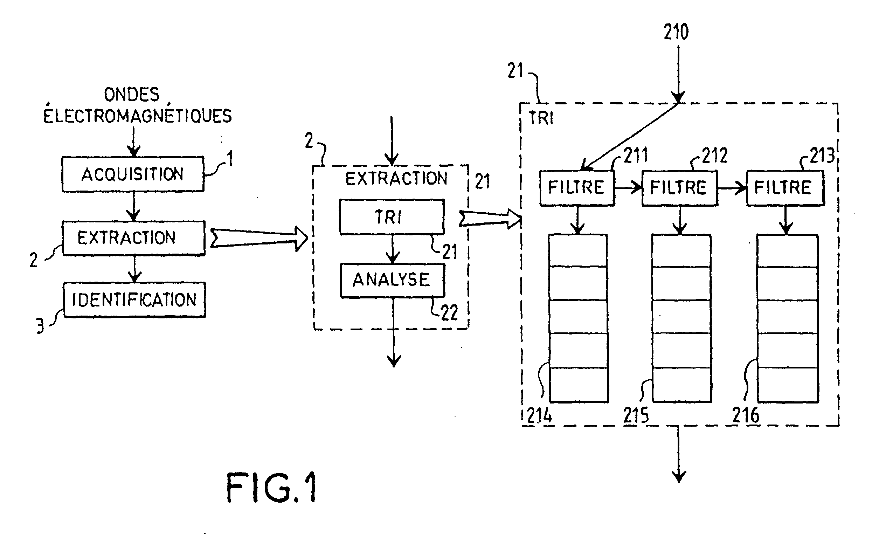

La figure 1 illustre par un schéma synoptique une chaîne de traitement d'un exemple de détecteur de radars et notamment de sa fonction d'extraction, selon l'art antérieur.

Les moyens d'acquisition 1 reçoivent les ondes électromagnétiques émises notamment par des radars. Ces moyens caractérisent les impulsions reçues en fournissant une estimation de leurs paramètres caractéristiques tels que notamment la fréquence moyenne, la longueur d'impulsion, l'azimut, le niveau de puissance et les modulations éventuelles.

La sortie des moyens d'acquisition 1 est reliée à l'entrée des moyens d'extraction 2. Ces derniers regroupent les impulsions relatives à chaque émission radar, séparent les différentes émissions reçues et caractérisent les pistes ainsi formées, notamment par la période de répétition et le type de mode d'émission.

La sortie des moyens d'extraction 2 est reliée à l'entrée des moyens d'identification 3 qui donnent les caractéristiques des radars interceptés et de leurs modes de fonctionnement.

L'extracteur 2 comporte des moyens de tri 21 et des moyens d'analyse 22. Les moyens de tri 21 regroupent les impulsions par blocs ou classes censés contenir chacun les impulsions relatives à une même émission, puis les moyens d'analyse 22 précisent les caractéristiques des émissions ainsi triées.

Les moyens de tri 21 ont leur entrée 210 reliée à la sortie des moyens d'acquisition 1. Le tri porte alors sur les paramètres de chaque impulsion issue des moyens d'acquisition. Ces paramètres seront appelés par la suite les paramètres primaires. Les moyens de tri 21 comportent une batterie de filtres 211, 212, 213 qui reçoivent chacun la totalité des impulsions issues des moyens d'acquisition et comparent les paramètres de chaque impulsion à des fourchettes qui leur sont caractéristiques. A chaque filtre 211, 212, 213 est associé un radar déterminé, défini par un ensemble de fourchettes portant sur les paramètres primaires. Lorsqu'une impulsion est reconnue par un filtre, elle est rangée dans un bloc mémoire spécifique 214, 215, 216 associé à chaque filtre 211, 212, 213.

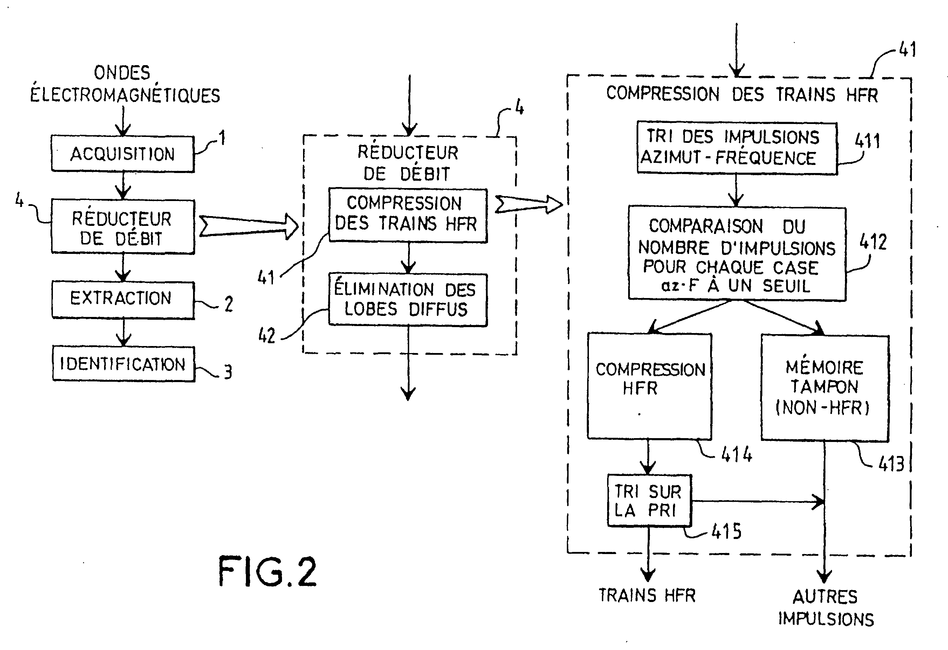

La figure 2, illustre par un schéma synoptique un exemple de détecteur selon l'invention.

Des moyens 4 de réduction de débit sont insérés entre les moyens d'acquisition 1 et les moyens d'extraction 2. Ces moyens de réduction de débit 4 éliminent une partie des informations redondantes contenues dans les suites d'impulsions reçues. Ils comportent par exemple à cet effet, des moyens 41 de caractérisation des suites d'impulsions à haute fréquence de récurrence, notées par la suite "train HFR", et de compression des données correspondantes, et des moyens 42 d'élimination des impulsions correspondant aux lobes diffus de radars déjà identifiés sur leurs lobes principaux. Les opérations de tri effectuées en aval par les moyens d'extraction 2 manient le train HFR comme une unique impulsion fournie par les moyens de réduction de débit 4.

En sortie des moyens d'acquisition 1, une impulsion radar interceptée est par exemple caractérisée par un ensemble de paramètres primaires parmi lesquels figurent notamment :
- l'instant de début de l'impulsion,
- l'azimut,
- la longueur de l'impulsion,
- la fréquence,
- le niveau de puissance moyenne de l'impulsion,
- la bande de modulation à l'intérieur de l'impulsion,
- des indicateurs de contrôle de la mesure.

Ces paramètres primaires, qui constituent environ huit mots, sont communiqués, pour chaque impulsion, à l'entrée des moyens de réduction de débit 4 et notamment par exemple à l'entrée des moyens 41 de compression des trains HFR.

Les moyens 41 de caractérisation et de compression des trains HFR réalisent par exemple un traitement d'une durée fixe T de signal acquis, de taille adaptée à la durée de l'état stationnaire des trains d'impulsions interceptés. La durée T est par exemple égale à 1 ms.

Les moyens de compression 41 comportent des moyens 411 de tri des impulsions dans le plan azimut-fréquence. Ces moyens 411 comprennent une mémoire stockant un histogramme bidimensionnel, c'est-à-dire une table de répartition, portant sur les paramètres primaires de fréquence instantanée et d'azimut fournis par les moyens d'acquisition 1. Les moyens de tri des impulsions 411 réalisent cet histogramme à partir des impulsions reçues pendant la durée T précitée. La table contenant l'histogramme est par exemple une table incrémentielle gérant l'ensemble des cases azimut-fréquence possibles. L'adressage de chaque case de cette table est par exemple assuré en temps réel par le simple transcodage des mots correspondant aux paramètres primaires azimut et fréquence accolés de chaque impulsion acquise. La case azimut-fréquence de l'impulsion est instantanément identifiée et incrémentée de 1.

A la suite des moyens 411 de tri des impulsions dans le plan azimut-fréquence, les moyens 41 de compression comportent des moyens de comparaison 412 du nombre d'impulsions pour chaque case de l'histogramme bidirectionnel avec un seuil donné. Ces moyens de comparaison 412 repèrent donc les émissions HFR présentes, celles-ci correspondant aux cases de l'histogramme dont le niveau dépasse le seuil donné. Une table secondaire gère par exemple les adresses des cases azimut-fréquence non nulles, ceci afin d'effectuer plus rapidement la comparaison au seuil de décision concernant la propriété HFR. Les émissions détectées sont ainsi réparties en deux classes, une classe d'émission HFR et une classe d'émission non HFR.

Les données sur les émissions non HFR sont par exemple transmises sans modification aux moyens d'extraction 2. A cet effet, les moyens 41 de compression des trains HFR comportent par exemple une mémoire tampon 413 pour stocker temporairement les données sur les émissions non HFR avant d'être traitées par les moyens d'extraction 2.

Le traitement des trains HFR est par exemple réalisé en deux opérations. Des moyens 414 de compression proprement dite exécutent le calcul de paramètres du train HFR, notamment la période de répétition des impulsions. La deuxième opération est réalisée par des moyens 415 de tri relatif à la période de répétition des impulsions PRI. Ces moyens 415 effectuent le tri des impulsions n'appartenant pas au train HFR mais présentes dans la même case azimut-fréquence de l'histogramme bidimensionnel précité. Ce tri est effectué à partir de l'estimation de la période de répétition des impulsions PRI du train HFR. Lorsque l'instant d'arrivée d'une impulsion ne correspond pas à la période de répétition du train, celle-ci est classée comme n'appartenant pas au train HFR et transmise séparément aux moyens d'extraction 2. Chaque train HFR isolé par le filtrage azimut-fréquence est par exemple traité par un microprocesseur qui calcule la période de répétition des impulsions du train et isole dans le train les impulsions parasites ne correspondant pas à l'émission HFR.

Le tri des impulsions peut par exemple se faire à partir d'autres paramètres primaires que l'azimut et la fréquence, en nombre différent de deux par exemple. Le tri des impulsions peut aussi être basé sur d'autres grandeurs que les paramètres primaires associés aux impulsions, il peut être notamment basé sur les valeurs des mesures électromagnétiques brutes du signal reçu échantillonné.

Typiquement, la durée de cohérence d'un train d'impulsions est par exemple de 1 ms. Pour un train HFR, 1 ms de signal représente environ 200 impulsions. Un train d'impulsions peut être caractérisé par exemple, et de façon non limitative, par les paramètres suivants qui sont calculés par les moyens de compression 414 :
- l'instant de début du train,
- l'instant de fin de train,
- le nombre d'impulsions du train,
- l'azimut moyen et sa dispersion,
- la longueur d'impulsion moyenne et sa dispersion,
- la fréquence moyenne et sa dispersion,
- la période de répétition PRI moyenne et sa dispersion,
- les caractéristiques de la loi d'évolution du niveau moyen des impulsions sur la durée du train, notamment la valeur moyenne, la pente et l'erreur quadratique moyenne autour de la droite moyenne, ou plus simplement le niveau moyen et sa dispersion.

Tous ces paramètres nécessitent environ 14 mots par train d'impulsions, soit par exemple 16 mots en ajoutant des indicateurs de contrôle. Ces mots sont déterminés par les moyens de compression 414 puis fournis aux moyens d'extraction 2. Un ensemble de 16 mots par exemple, caractérise un train HFR.

On passe donc, pour un train de 200 impulsions de 8 mots, soit 1600 mots, à seulement 16 mots, soit une réduction d'un facteur 100 du débit d'octets par seconde.

Les moyens de réduction de débit 4 peuvent par exemple comporter en outre des moyens 42 d'élimination des impulsions correspondant à des lobes diffus. Ces moyens 42 peuvent être implantés en amont ou en aval des moyens 41 de compression des trains HFR.

Les moyens 42 d'élimination des lobes diffus comportent par exemple un seuil. Lorsqu'une impulsion est présente dans une case azimut-fréquence identique à celle d'une émission radar à haute fréquence de résolution ou non déjà caractérisée, et que son niveau de puissance est inférieur au seuil précité, l'impulsion est éliminée du traitement. Une table des cases azimut-fréquence est par exemple disponible et gérée par les moyens d'extraction 2. Le seuil peut aussi par exemple être géré en aval par les moyens d'extraction. Il peut par ailleurs être adapté à chaque émission recherchée.

Dans une variante de réalisation, les moyens 42 d'élimination n'éliminent pas uniquement les impulsions de faible niveau mais aussi par exemple celles de niveau plus élevé. Les moyens 42 d'élimination comportent par exemple un seuil supérieur permettant l'élimination d'impulsions, présentes dans une case de l'histogramme et identiques à une émission déjà identifiée, et dont le niveau est plus grand que ce seuil supérieur précité.

## Revendications

1. Détecteur d'émissions électromagnétiques, **caractérisé en ce qu'**il comporte entre des moyens d'acquisition (1) des impulsions électromagnétiques reçues et des moyens d'extraction (2) regroupant les impulsions relatives à chaque émission, des moyens de réduction de débit (4) comportant des moyens (41) de caractérisation des suites d'impulsions à haute fréquence de récurrence (HFR) et de compressions des données correspondantes.

2. Détecteur selon la revendication 1, **caractérisé en ce que** les moyens (41) de caractérisation et de compression des données relatives à des suites d'impulsions à haute fréquence de récurrence (HFR) comportent des moyens de tri des impulsions (411) réalisant un histogramme portant sur des paramètres primaires fournis par les moyens d'acquisition (1) et des moyens de comparaison (412) du nombre d'impulsions pour chaque case de l'histogramme avec un seuil donné, les suites d'impulsions à haute fréquence de récurrence correspondant aux cases de l'histogramme dont le nombre d'impulsions dépasse le seuil donné.

3. Détecteur selon la revendication 2, **caractérisé en ce que** l'histogramme est contenu en mémoire dans une table incrémentielle, l'adressage de chaque case de cette table étant assuré en temps réel par transcodage des mots correspondant à certains des paramètres primaires accolés de chaque impulsion acquise.

4. Détecteur selon l'une quelconque des revendications 2 ou 3, **caractérisé en ce que** les paramètres primaires utilisés sont la fréquence et l'azimut.

5. Détecteur selon l'une quelconque des revendications précédentes, **caractérisé en ce que** les données des suites d'impulsions qui ne sont pas à haute fréquence de récurrence sont transmises sans modification aux moyens d'extraction (2).

6. Détecteur selon l'une quelconque des revendications précédentes, **caractérisé en ce que** les moyens (41) de caractérisation et de compression comportent des moyens de compression (414) qui calculent pour chaque suite d'impulsions à haute fréquence de récurrence un ensemble de paramètres caractérisant ce train, cet ensemble de paramètres étant fourni aux moyens d'extraction (2).

7. Détecteur selon la revendication 6, **caractérisé en ce que** l'ensemble de paramètres contenant la période de répétition des impulsions (PRI), les moyens (41) de caractérisation et de compression comportent des moyens de tri (415) relatifs à la période de répétition (PRI), ces moyens (415) effectuant le tri des impulsions n'appartenant pas à une suite d'impulsions à haute fréquence de récurrence.

8. Détecteur selon les revendications 2 et 7, **caractérisé en ce que** les moyens de tri (415) effectuent le tri des impulsions n'appartenant pas à un train à haute fréquence de récurrence mais appartenant à la même case de l'histogramme.

9. Détecteur selon l'une quelconque des revendications précédentes, **caractérisé en ce que** les moyens (4) de réduction de débit comportent des moyens (42) d'élimination des impulsions correspondant à des lobes diffus de radars déjà identifiés.

10. Détecteur selon la revendication 9 et l'une quelconque des revendications 2 à 8, **caractérisé en ce que** les moyens (42) d'élimination des impulsions correspondant à des lobes diffus comportent un seuil, une impulsion étant éliminée du traitement lorsqu'elle est présente dans une case de l'histogramme identique à celle d'une émission déjà identifiée, et que son niveau de puissance est inférieur au seuil précité.

11. Détecteur selon la revendication 10, **caractérisé en ce que** les moyens (42) d'élimination des impulsions correspondant à des lobes diffus comportent un seuil supérieur permettant l'élimination d'impulsions, présentes dans une case de l'histogramme et identiques à une émission déjà identifiée, et dont le niveau est plus grand que ce seuil supérieur précité.

## Claims

1. Detector of electromagnetic emissions, **characterized in that** it comprises, between means (1) for the acquisition of the electromagnetic pulses received and extraction means (2) which group together the pulses relating to each emission, bit rate reduction means (4) comprising means (41) of characterization of the strings of pulses with high recurrence frequency (HRF) and of compression of the corresponding data.

2. Detector according to Claim 1, **characterized in that** the means (41) of characterization and compression of the data relating to strings of pulses with high recurrence frequency (HRF) comprise means for sorting the pulses (411) which produce a histogram pertaining to primary parameters supplied by the acquisition means (1), and means (412) for comparing the number of pulses for each box of the histogram with a given threshold, the strings of pulses with high recurrence frequency corresponding to the boxes of the histogram whose number of pulses exceeds the given threshold.

3. Detector according to Claim 2, **characterized in that** the histogram is contained in memory in an incremental table, the addressing of each box of this table being carried out in real time by transcoding the words corresponding to certain of the primary parameters bracketed with each pulse acquired.

4. Detector according to either of Claims 2 and 3, **characterized in that** the primary parameters used are the frequency and the azimuth.

5. Detector according to any one of the preceding claims, **characterized in that** the data of the strings of pulses which do not have high recurrence frequency are transmitted without modification to the extraction means (2).

6. Detector according to any one of the preceding claims, **characterized in that** the characterization and compression means (41) include compression means (414) which, for each string of pulses with high recurrence frequency, calculate a set of parameters characterizing this train, this set of parameters being supplied to the extraction means (2).

7. Detector according to Claim 6, **characterized in that** the set of parameters containing the pulse repetition period (PRP), the characterization and compression means (41) comprise sorting means (415) relating to the repetition period (PRP), these means (415) sorting the pulses which do not belong to a string of pulses with high recurrence frequency.

8. Detector according to Claims 2 and 7, **characterized in that** the sorting means (415) sort the pulses which do not belong to a train with high recurrence frequency but do belong to the same box of the histogram.

9. Detector according to any one of the preceding claims, **characterized in that** the bit rate reduction means (4) comprise means (42) for eliminating pulses which correspond to diffuse lobes of radars already identified.

10. Detector according to Claim 9 and one of Claims 2 to 8, **characterized in that** the means (42) for eliminating the pulses which correspond to diffuse lobes comprise a threshold, a pulse being eliminated from the processing when it is present in a histogram box identical to that of an emission already identified, and when its power level is below the aforementioned threshold.

11. Detector according to Claim 10, **characterized in that** the means (42) for eliminating the pulses corresponding to diffuse lobes comprise an upper threshold allowing the elimination of pulses which are present in a box of the histogram and are identical to an emission already identified, and whose level is greater than this aforementioned upper threshold.

## Patentansprüche

1. Detektor für elektromagnetische Wellen, **dadurch gekennzeichnet, daß** er zwischen Mitteln (1) zur Erfassung der empfangenen elektromagnetischen Wellen und Extraktionsmitteln (2), die die Impulse bezüglich jedes Senders ordnen, Mittel (4) zur Verringerung des Durchsatzes enthält, die Mittel (41) zur Charakterisierung der Impulsfolgen hoher Wiederholfrequenz (HFR) und zur Kompression der entsprechenden Daten aufweisen.

2. Detektor nach Anspruch 1, **dadurch gekennzeichnet, daß** die Mittel (41) zur Charakterisierung und Kompression der Daten bezüglich der Impulsfolgen hoher Wiederholfrequenz (HFR) Mittel (411) zur Auswahl der Impulse, die ein Histogramm über die von den Erfassungsmitteln (1) gelieferten primären Parameter bilden, und Mittel (412) zum Vergleich der Anzahl von Impulsen für jedes Fach des Histogramms mit einer gegebenen Schwelle enthalten, wobei die Impulsfolgen hoher Wiederholfrequenz den Fächern des Histogramms entsprechen, deren Anzahl von Impulsen die gegebene Schwelle übersteigt.

3. Detektor nach Anspruch 2, **dadurch gekennzeichnet, daß** das Histogramm in einer inkrementalen Tabelle gespeichert ist, wobei die Adressierung jedes Fachs dieser Tabelle in Echtzeit mittels Transkodierung der Wörter entsprechend bestimmten der jedem erfaßten Impuls angehängten Primärparameter erfolgt.

4. Detektor nach einem beliebigen der Ansprüche 2 und 3, **dadurch gekennzeichnet, daß** die verwendeten Primärparameter die Frequenz und der Azimut sind.

5. Detektor nach einem beliebigen der vorstehenden Ansprüche, **dadurch gekennzeichnet, daß** die Daten der Impulszüge, die keine Impulszüge mit hoher Wiederholfrequenz sind, unverändert an die Extraktionsmittel (2) übertragen werden.

6. Detektor nach einem beliebigen der vorstehenden Ansprüche, **dadurch gekennzeichnet, daß** die Mittel (41) zur Charakterisierung und Kompression Mittel (414) zur Kompression enthalten, die für jede Impulsfolge mit hoher Wiederholfrequenz eine Gruppe von diesen Impulszug charakterisierenden Parametern berechnen und an die Extraktionsmittel (2) übermitteln.

7. Detektor nach Anspruch 6, **dadurch gekennzeichnet, daß**, wenn die Gruppe von Parametern die Wiederholperiode der Impulse (PRI) enthält, die Mittel (41) zur Charakterisierung und zur Kompression Auswahlmittel (415) bezüglich der Wiederholperiode (PRI) enthalten, die die Impulse auswählen, die nicht einer Impulsfolge hoher Wiederholfrequenz angehören.

8. Detektor nach den Ansprüchen 2 und 7, **dadurch gekennzeichnet, daß** die Auswahlmittel (415) Impulse auswählen, die nicht zu einem Impulszug hoher Wiederholfrequenz, aber zum gleichen Fach des Histogramms gehören.

9. Detektor nach einem beliebigen der vorstehenden Ansprüche, **dadurch gekennzeichnet, daß** die Mittel (4) zur Verringerung des Durchsatzes Mittel (42) zur Eliminierung der Impulse aufweisen, die diffusen Keulen von bereits identifizierten Radarsendern entsprechen.

10. Detektor nach Anspruch 9 und einem beliebigen der Ansprüche 2 bis 8, **dadurch gekennzeichnet, daß** die Mittel (42) zur Eliminierung der Impulse entsprechend diffusen Keulen eine Schwelle enthalten, wobei ein Impuls von der Bearbeitung ausgeschlossen wird, wenn er sich in einem Fach des Histogramms befindet, das dem eines bereits identifizierten Radarsenders gleicht, und wenn sein Leistungspegel unter einer vorgegeben Schwelle liegt.

11. Detektor nach Anspruch 10, **dadurch gekennzeichnet, daß** die Mittel (42) zur Eliminierung der Impulse entsprechend diffusen Keulen eine obere Schwelle aufweisen, mit der es möglich ist, Impulse zu eliminieren, die sich in einem Fach des Histogramms befinden und einer bereits identifizieren Radarwelle gleichen, wenn der Pegel diese obere Schwelle übersteigt.
